# EUROPÄISCHE PATENTSCHRIFT

(11) **EP 1 476 345 B1**
(45) Veröffentlichungstag und Bekanntmachung des Hinweises auf die Patenterteilung: **28.09.2005**
(21) Anmeldenummer: 03704639.8
(22) Anmeldetag: 18.02.2003
(51) Int. Cl.: B62D 3/12

(54) **ZAHNSTANGENLENKUNG FÜR KRAFTFAHRZEUGE**
RACK-AND-PINION STEERING SYSTEM FOR MOTOR VEHICLES
DIRECTION A CREMAILLERE POUR VEHICULES

(30) Priorität: 22.02.2002 DE 10207466
(43) Veröffentlichungstag der Anmeldung: 17.11.2004
(73) Patentinhaber: ZF Lenksysteme GmbH, 73527 Schwäbisch Gmünd (DE)
(72) Erfinder: SCHÄNZEL, Rainer, 73457 Essingen (DE)
(86) Internationale Anmeldenummer: PCT/EP2003/001600
(87) Internationale Veröffentlichungsnummer: WO 2003/070541

(56) Entgegenhaltungen:
- EP-A- 1 277 645
- WO-A-98/58754
- DE-A- 19 917 392
- FR-A- 2 769 425
- GB-A- 1 001 985
- US-A- 3 927 576

## Beschreibung

Die Erfindung betrifft eine Zahnstangenlenkung für Kraftfahrzeuge, deren Zahnstange, die längsverschiebbar in einem Gehäuse gelagert ist, an beiden Enden mit je einer Spurstange gelenkig verbunden ist, wobei abdichtende Faltenbälge einerseits am Gehäuse und andererseits an den längsverschiebbaren Spurstangen befestigt sind. Diese Faltenbälge aus einem flexiblen Werkstoff dienen zum Schutz der Gelenkverbindung und der Zahnstange gegen Staub, anderen Festkörpern und Feuchtigkeit.

Aufgrund der axialen Verschiebbewegung der Zahnstange entsteht während des Fahrbetriebes ein so genannter Pumpeneffekt, der die Faltenbälge durch Luftansaugung aber auch durch temperaturbedingte Luftausdehnung aufweitet und somit zusätzlich belastet. Andererseits kann es in den Faltenbälgen zu Unterdruck gegenüber der Umgebung kommen, der zum Einknicken der Ringfalten führen kann. Für die in den Faltenbälgen oder auch innerhalb des Gehäuses auftretenden Volumenänderungen muss ein Ausgleich geschaffen werden.

In der DE 29 00 026 C 3 wird eine Entlüftungsvorrichtung für ein Wellengelenk mit Faltenbalgabdichtung beschrieben, die eine geschlitzte Muffe als Strömungsverbindung aufweist, welche zwischen der Welle und der Befestigungsmuffe des Faltenbalges integriert ist und einen Luftdurchlass ermöglicht. Nachteilig ist bei einer solchen Lösung, dass bei nasser Fahrbahn infolge der Radnähe und starkem Anfall von Spritzwasser durch diese Öffnung Wasser und Schmutz in den Gelenkraum eindringen kann und damit die zu schützenden Bauteile einem erhöhten Verschleiß unterworfen werden.

Durch die US 3, 927, 576 ist eine durch einen Faltenbalg geschützte Gelenkverbindung bekannt, bei welcher dieser Nachteil beseitigt wird, indem im Befestigungsbund des Faltenbalges oder in angrenzenden Bereichen des Gehäuses Festkörperfilter integriert sind, die neben einem Druckausgleich zwischen Innenraum und der Atmosphäre auch das Eindringen von Feuchtigkeit und Schmutz verhindem. Dabei ist aber eine Veränderung an den Faltenbälgen notwendig, sodass keine handelsüblichen Bälge, sondern Sonderanfertigungen notwendig werden. Eine Integration des Feststofffilters in speziellen Entlüftungsöffnungen des Gehäuses lässt einen nachträglichen Einbau in schon im Betrieb befindliche Lenksysteme nur mit einem hohen Aufwand zu.

In der EP 1 277 645 A1 (Stand der Technik nach Art. 54(3) EPÜ), ist eine Zahnstangenlenkung für Kraftfahrzeuge beschrieben, deren Zahnstange längsverschiebbar in einem Lenkgehäuse gelagert ist. An ihren beiden Enden ist die Zahnstange mit je einer Lenkspurstange gelenkig verbunden. Ritzel und Zahnstange werden durch ein Druckstück im ständigen Eingriff gehalten. Abdichtende Faltenbälge sind einerseits am Lenkgehäuse und andererseits an den Spurstangen befestigt. Ein Druckausgleichselement ist im Druckstück integriert.

Der Erfindung liegt das Problem zugrunde, eine Zahnstangenlenkung der eingangs angegebenen Art zu konzipieren, bei welcher der notwendige Druckausgleich im Innenraum der Faltenbälge bzw. des Lenkgetriebegehäuses und der Atmosphäre gewährleistet wird und unabhängig von der jeweiligen Einsatzsituation und Beanspruchung der Faltenbälge eine zuverlässige Abdichtung der selben zu erreichen. Das Problem wird durch die Merkmale des Anspruchs 1 gelöst.

Die mit der Erfindung erzielten Vorteile bestehen insbesondere darin, dass eine zuverlässige Abdichtung der zu schützenden Bauteile bei kontinuierlichem Druckausgleich mit einfachen Mitteln erfolgt und die Eigenschaften ihrer translatorischen Bewegung erhalten bleibt, ohne dass Veränderungen an den elastischen Faltenbälgen bzw. am Lenkgetriebegehäuse notwendig werden.

Vorteilhafte Weiterbildungen sind in den abhängigen Ansprüchen angegeben.

Ein Ausführungsbeispiel der Erfindung ist in der Zeichnung dargestellt und im Folgenden näher erläutert. Es zeigen:
- Fig. 1: den Aufbau einer elektrisch unterstützten Hilfskraftlenkung in schematischer Darstellung;
- Fig. 2: eine Schnittdarstellung mit einem in einem Druckstück integrierten Druckausgleichselement.

Obwohl die Erfindung anhand einer Zahnstangenlenkung 1 mit elektrischer Hilfskraftunterstützung beschrieben wird, kann sie auch bei Zahnstangenlenkungen 1 mit hydraulischer oder ohne Hilfskraftunterstützung oder bei Lenkungen mit Fremdkraftunterstützung angewendet werden.

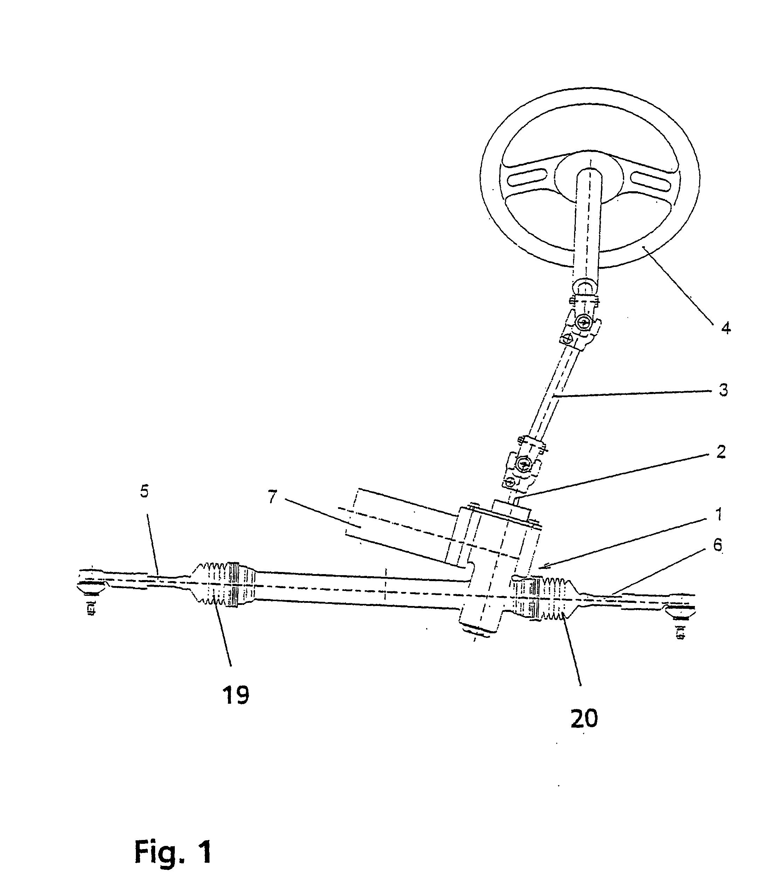

Bei einer solchen Zahnstangenlenkung 1 trägt ein Ritzel 9 eine Eingangswelle 2, die in dem Ausführungsbeispiel nach Fig. 1 über eine mit Kreuzgelenken versehene Lenksäule 3 mit einem Lenkhandrad 4 in Wirkverbindung steht. Die Zahnstange der Zahnstangenlenkung 1 bildet zusammen mit zwei Spurstangen 5 und 6, deren gelenkigen Verbindungen mit der Zahnstange 12 durch die Faltenbälge 19 und 20 schützend abgeschlossen werden, am Ausgangsglied, das mit nicht dargestellten, zu lenkenden Rädern in Wirkverbindung steht. Die Zahnstange 12 bildet außerdem das Abtriebsteil der Lenkung. Mit einer solchen Hilfskraftlenkung kann das Lenkdrehmoment von dem Lenkhandrad 4 zu den lenkenden Rädern übertragen werden. Durch einen Elektromotor 7 kann eine Hilfskraft auf die Eingangswelle 2 ausgeübt werden. In diesem Ausführungsbeispiel ist der Elektromotor 7 derart angeordnet, dass seine Achse senkrecht zur Achse der Eingangswelle 2 und damit des Ritzels (9) steht. Seine Achse kann aber auch unter einem anderen Winkel zur Achse der Eingangswelle 2, beispielsweise unter einem Winkel von 60 ° bis 130 ° stehen.

Mit gleicher oder ähnlicher Wirkung kann der Elektromotor 7 derart angeordnet werden, dass seine Achse parallel zu der Achse der Eingangswelle 2 und damit des Ritzels 9 oder eines anderen Teiles der Lenksäule 3 angeordnet ist.

In den beiden bisher beschriebenen Anordnungsarten des Elektromotors 7 wirkt dieser auf die Eingangswelle 2 und das Ritzel 9 der Zahnstangenlenkung 1. Ebenso kann der Elektromotor 7 derart angeordnet werden, dass seine Achse parallel oder unter einem Winkel oder koaxial zu der Achse der Zahnstange 12 der Zahnstangenlenkung 1 liegt.

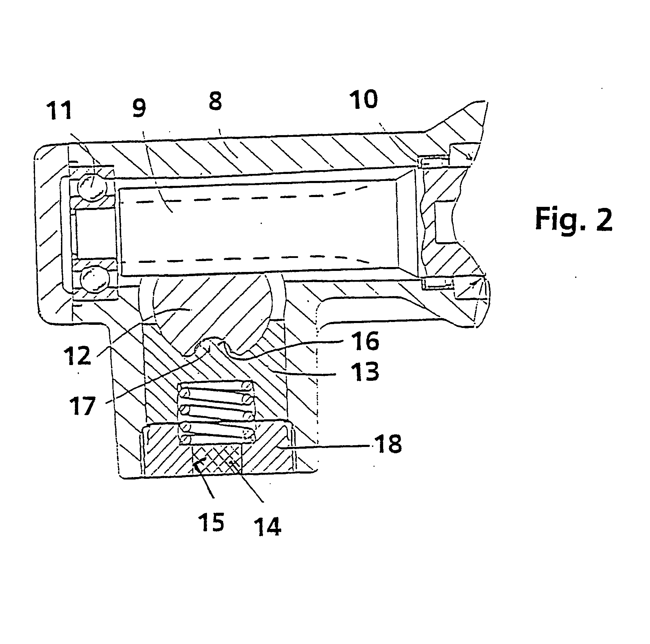

In der Schnittdarstellung nach der Fig. 2 ist ein Ritzel 9 in zwei Lagern 10 und 11 drehbar gelagert. Das Ritzel 9 steht über seine Verzahnung in Eingriff mit einer Zahnstange 12, die in dem Lenkgehäuse 8 axial verschiebbar geführt ist. Die Zahnstange 12 wird mit Hilfe eines federbelasteten Druckstückes 13 in bekannter Weise gegen die Verzahnung des Ritzels 9 gedrückt.

Die Zahnstange 12 weist in ihrem Verzahnungsbereich an der Außenumfangsfläche an der Seite, die der Verzahnung gegenüberliegt, eine Längsnut 16 auf. Die Längsnut 16 arbeitet mit einer an dem Druckstück 13 angeformten Längsnase 17 zusammen. Durch das Zusammenwirken der Längsnut 16 und der Längsnase 17 wird ein Kippen der Zahnstange 12 im Betrieb verhindert. Mit gleicher Wirkung können diese beiden Elemente vertauscht werden, sodass die Längsnase an der Zahnstange 12 und die Längsnut an dem Druckstück 13 angeordnet sind.

Zum Druckausgleich im Innenraum des Getriebegehäuses 8 der Zahnstangenlenkung 1 ist ein Druckausgleichselement 14, welches luftdurchlässig und flüssigkeitsdicht ausgeführt ist, in der Einstellschraube 18 des Druckstückes 13 integriert. Die Einstellschraube 18, hier als Schraubdeckel ausgeführt, dient zur Einstellung des Druckstückspiels, das durch den Betrag des Einschraubens des Deckels eingestellt werden kann.

Beispielhaft ist das Druckausgleichselement 14 als poröser Sinter-Kunststoff-Einsatz ausgeführt, der in eine Aussparung 15 der Einstellschraube 18, die an die Abmessung des Sinter-Kunststoff-Einsatzes angepasst ist, angeordnet ist.

Der Sinter-Kunststoff-Einsatz ist als Presstablette ausgeführt, die aus PTEE- Werkstoff besteht. Die Presstablette ist dabei aus gemahlenem Granulat gebildet, das beispielsweise in Form von Kügelchen vorliegt, wobei das Granulat unter Druck und Temperatur miteinander verbunden wird. Die unterschiedliche Dichte des Sintermaterials, die für den Luftdurchgangswert maßgeblich ist, kann dabei in einfacher Weise durch die Größe und / oder Form des Granulates beeinflusst werden.

Dabei nimmt die Luftdurchlässigkeit der Presstablette entsprechend der Höhe des aufgebrachten Pressdruckes ab. Die Eigenschaft der Presstablette Luft durchzulassen und ein Eindringen von Feuchtigkeit zu verhindern, lässt sich daher in besonders einfacher Weise durch das Granulat bzw. den Druck und die Temperatur des Sintervorganges bestimmen.

Das Druckausgleichselement 14 kann auch aus einem anderen Sintermaterial, wie z. B. Sinterbronze bestehen, der als dünne Scheibe oder Membran ausgeführt sein kann.

In einem nicht dargestellten Anwendungsfall besteht die gesamte Einstellschraube 18 aus porösem Sintermaterial.

Durch das Einbringen einer Presstablette in die Einstellschraube 18 des Druckstückes 13 kann in besonders einfacher Weise ein Druckausgleichselement 14 in ein schon im Betrieb befindlichen Lenkgetriebe 8 nachträglich eingesetzt werden, indem die vorhandene Einstellschraube 18 gegen eine mit Druckausgleichselement 14 ausgewechselt wird.

## Patentansprüche

1. Zahnstangenlenkung (1) für Kraftfahrzeuge, mit folgenden Merkmalen:
- die Zahnstange (12) ist längs verschiebbar in einem Lenkgetriebegehäuse (8) gelagert,
- an ihren beiden Enden ist die Zahnstange (12) mit je einer Lenkspurstange (5; 6) gelenkig verbunden,
- Ritzel (9) und Zahnstange (12) werden durch ein Druckstück (13) im ständigen Eingriff gehalten,
- abdichtende Faltenbälge (19; 20) sind einerseits am Lenkgetriebegehaüse (8) und andererseits an den Spurstangen (5; 6) befestigt,
- im Lenkgetriebegehäuse (8) ist mindestens ein Druckausgleichselement (14) integriert, wobei das Druckausgleichselement (14) im Druckstück (13) integriert ist,
- das Druckausgleichselement (14) besteht aus einem porösen Sintermaterial.

2. Zahnstangenlenkung für Kraftfahrzeuge nach Anspruch 1, **dadurch gekennzeichnet, dass** die Einstellschraube (18) des Druckstückes (13) mit dem Druckausgleichselement (14) ausgestattet ist.

3. Zahnstangenlenkung für Kraftfahrzeuge nach Anspruch 1, **dadurch gekennzeichnet, dass** die Einstellschraube (18) des Druckstückes (13) aus porösem Sintermaterial besteht.

4. Zahnstangenlenkung für Kraftfahrzeuge nach Anspruch 1, **dadurch gekennzeichnet, dass** das Druckausgleichselement (14) als poröser Sinter-Kunststoff-Einsatz ausgeführt ist.

5. Zahnstangenlenkung für Kraftfahrzeuge nach Anspruch 4, **dadurch gekennzeichnet, dass** das Gehäuse oder die Einstellschraube des Druckstückes (13) eine an die Abmessungen des Sinter-Kunststoff-Einsatzes angepasste Aussparung (15) aufweist, die der Aufnahme des Sinter-Kunststoff-Einsatzes dient.

6. Zahnstangenlenkung für Kraftfahrzeuge nach einem der Ansprüche 4 oder 5, **dadurch gekennzeichnet, dass** der Sinter-Kunststoff-Einsatz als Presstablette ausgeführt ist und in die Aussparung (15) einpressbar ist.

7. Zahnstangenlenkung für Kraftfahrzeuge nach Anspruch 6, **dadurch gekennzeichnet, dass** die Presstablette aus gemahlenem Granulat gebildet ist, das durch einen Sintervorgang miteinander verbunden wird.

8. Zahnstangenlenkung für Kraftfahrzeuge nach einem der Ansprüche 1 oder 2, **dadurch gekennzeichnet, dass** das Druckausgleichselement (14) als Scheibe oder Membran ausgebildet ist.

## Claims

1. Rack-and-pinion steering system (1) for motor vehicles, having the following features:
- the rack (12) is mounted in a steering mechanism housing (8) such that it is longitudinally displaceable,
- the rack (12) is connected at its two ends to in each case one steering tie rod (5; 6) in an articulated manner,
- the pinion (9) and rack (12) are kept in constant engagement by a pressure piece (13),
- sealing bellows (19; 20) are fastened on one side to the steering mechanism housing (8) and on the other side to the steering rods (5; 6),
- at least one pressure compensation element (14) is integrated in the steering mechanism housing (8),
the pressure compensation element (14) being integrated in the pressure piece (13),
- the pressure compensation element (14) is composed of a porous sintered material.

2. Rack-and-pinion steering system for motor vehicles according to Claim 1, **characterized in that** the adjusting screw (18) of the pressure piece (13) is equipped with a pressure compensation element (14).

3. Rack-and-pinion steering system for motor vehicles according to Claim 1, **characterized in that** the adjusting screw (18) of the pressure piece (13) is composed of a porous sintered material.

4. Rack-and-pinion steering system for motor vehicles according to Claim 1, **characterized in that** the pressure compensation element (14) is configured as a porous sintered plastic insert.

5. Rack-and-pinion steering system for motor vehicles according to Claim 4, **characterized in that** the housing or the adjusting screw of the pressure piece (13) has a cutout (15) which is adapted to the dimensions of the sintered plastic insert and serves to accommodate the sintered plastic insert.

6. Rack-and-pinion steering system for motor vehicles according to either of Claims 4 or 5, **characterized in that** the sintered plastic insert is configured as a pressed pellet and can be pressed into the cutout (15).

7. Rack-and-pinion steering system for motor vehicles according to Claim 6, **characterized in that** the pressed pellet is formed from ground granules which have been joined to one another by a sintering process.

8. Rack-and-pinion steering system for motor vehicles according to one of Claims 1 or 2, **characterized in that** the pressure compensation element (14) is configured as a disk or diaphragm.

## Revendications

1. Direction à crémaillère (1) pour véhicules automobiles, comprenant les caractéristiques suivantes :
- la crémaillère (12) est montée dans un carter de mécanisme de direction (8) de manière déplaçable en longueur,
- la crémaillère (12) est connectée de manière articulée à ses deux extrémités à une barre d'accouplement de direction respective (5 ; 6),
- pignon (9) et crémaillère (12) sont maintenus en prise constante par une pièce de pression (13),
- des soufflets d'étanchéité (19 ; 20) sont fixés d'une part au carter de mécanisme de direction (8) et d'autre part aux barres d'accouplement (5 ; 6),
- dans le carter de mécanisme de direction (8) est intégré au moins un élément dé compensation de pression (14), l'élément de compensation de pression (14) étant intégré dans la pièce de pression (13),
- l'élément de compensation de pression (14) se compose d'un matériau fritté poreux.

2. Direction à crémaillère pour véhicules automobiles selon la revendication 1, **caractérisée en ce que** la vis de réglage (18) de la pièce de pression (13) est munie de l'élément de compensation de pression (14).

3. Direction à crémaillère pour véhicules automobiles selon la revendication 1, **caractérisée en ce que** la vis de réglage (18) de la pièce de pression (13) se compose d'un matériau fritté poreux.

4. Direction à crémaillère pour véhicules automobiles selon la revendication 1, **caractérisée en ce que** l'élément de compensation de pression (14) est réalisé sous forme d'insert en plastique fritté poreux.

5. Direction à crémaillère pour véhicules automobiles selon la revendication 4, **caractérisée en ce que** le carter ou la vis de réglage de la pièce de pression (13) présente un évidement (15) adapté aux dimensions de l'insert en plastique fritté, qui sert à recevoir l'insert en plastique fritté.

6. Direction à crémaillère pour véhicules automobiles selon l'une quelconque des revendications 4 ou 5, **caractérisée en ce que** l'insert en plastique fritté est réalisé sous forme de tablette de pression et peut être pressé dans l'évidement (15).

7. Direction à crémaillère pour véhicules automobiles selon la revendication 6, **caractérisée en ce que** la tablette de pression est formée de granulés moulus qui sont combinés entre eux par un procédé de frittage.

8. Direction à crémaillère pour véhicules automobiles selon l'une quelconque des revendications 1 ou 2, **caractérisée en ce que** l'élément de compensation de pression (14) est réalisé sous forme de disque ou de membrane.
